(19) Europäisches Patentamt
European Patent Office
Office européen des brevets

(11) Publication number: 0 015 453
B1

(12) **EUROPEAN PATENT SPECIFICATION**

(45) Date of publication of patent specification: 04.11.81

(51) Int. Cl.³: A 01 N 57/20 //(A01N57/20, 43/36)

(21) Application number: 80100877.2

(22) Date of filing: 22.02.80

(54) **Synergistic herbicidal compositions and method for controlling undesirable vegetation.**

(30) Priority: 26.02.79 US 15553
17.01.80 US 108602

(43) Date of publication of application:
17.09.80 Bulletin 80/19

(45) Publication of the grant of the European patent:
04.11.81 Bulletin 81/44

(84) Designated Contracting States:
AT BE CH DE FR GB IT NL SE

(56) References cited:
FR - A - 2 305 434
FR - A - 2 408 304
US - A - 3 837 834
US - A - 3 879 188
US - A - 3 929 450

(73) Proprietor: STAUFFER CHEMICAL COMPANY
Westport Connecticut 06880 (US)

(72) Inventor: Thiele, Gerald Herman
587 West Remington Drive
Sunnyvale California 94087 (US)
Inventor: Stamp, David Lee
637 South Fourth Street
Albion Nebraska 68620 (US)

(74) Representative: Hirsch, Marc-Roger
34 rue de Bassano
F-75008 Paris (FR)

EP 0 015 453 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

Synergistic herbicidal compositions and method for controlling undesirable vegetation.

The protection of crops from weeds and other vegetation which inhibit crop growth by consuming valuable acreage or soil nutrients is a constantly recurring problem in agriculture. To help combat this problem, researchers in the field of synthetic chemistry have produced an extensive variety of chemicals and chemical formulations effective in the control of such unwanted growth. Chemical herbicides of many types have been disclosed in the literature and a large number are in commercial use.

In many cases, active herbicides have been shown to be more effective in combination than when applied individually. The result is often termed "synergism", since the combination demonstrates a potency or activity level exceeding that which it would be expected to have, based on a knowledge of the individual potencies of the components. The present invention resides in the discovery that certain pyrrolidones and certain phosphonic acids, already known individually for their herbicidal potency, display this synergistic effect when applied in combination.

The two classes of compounds forming the combination which is the subject of the present invention are independently known in the art as active herbicides. Pyrrolidones are disclosed as herbicides in U.S. Patent No. 4 110 105 (Teach, August 29, 1979), and phosphonic acids are similarly disclosed in U.S. Patent:

— No. 3 853 530 (Franz, Decembre 10, 1974),
— No. 3 799 758 (Franz, March 26, 1974), and
— No. 3 929 450 (Hamm, Decembre 30, 1975),

as well as numerous other reference including:

— Maynard et al., "Organophosphorus Compounds. I. 2-chloroalkylphosphonic Acids as Phosphorylating Agents", *Aust. J. Chem., 16*, 596)608 (1963), and
— Yang, "Ethylene Evolution From ,2-Chloroethylphosphonic Acid", *Plant Physyiol, 44,* 1203—1304 (1969).

It has now been found that synergism in the control of undesirable vegetation is exhibited by compositions comprising a mixture of the following two components:

(a) a pyrrolidone of the formula:

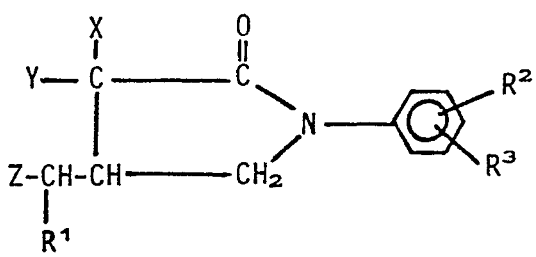

(I)

in which:

X is selected from the group consisting of hydrogen, chlorine and methyl;
Y is selected from the group consisting of hydrogen, chlorine and bromine;
Z is selected from the group consisting of chlorine and bromine;
$R^1$ is selected from the group consisting of hydrogen and $C_1$—$C_4$ alkyl
$R^2$ is selected from the group consisting of hydrogen, halogen, $C_1$—$C_4$ alkyl, acetyl, trifluoromethyl, nitro, cyano, $C_1$—$C_4$ alkoxy, $C_1$—$C_4$ alkylthio, $C_1$—$C_4$ alkylsulfinyl, $C_1$—$C_4$ alkylsulfonyl, trifluoromethylthio, trifluoromethylsulfinyl, trifluoromethylsulfonyl, pentafluoropropionamido, and 3-methylureido; and
$R^3$ is selected from the group consisting of hydrogen, $C_1$—$C_4$ alkyl, chlorine and trifluoromethyl;

*and*

(b) a phosphonic acid of the formula:

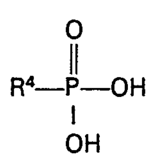

(II)

in which:

$R^4$ is selected from the group consisting of $C_1$—$C_4$ alkyl, $C_1$—$C_4$ haloalkyl, and —$CH_2NHCH_2COOH$.

In the compositions of the present invention, pyrrolidones of the following formula are preferred:

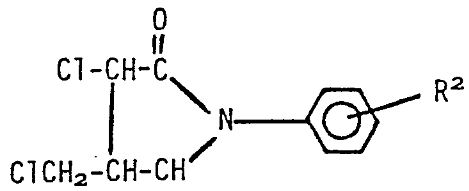

in which: $R^2$ is trifluoromethyl or cyano.

— The term "alkyl" as used herein includes both straight-chain and branched-chain groups. The carbon atom ranges are intended to be inclusive of both upper and lower limits.

— The terms "synergism" and "synergistic" are used herein to convey the result observed when a combination of herbicides demonstrates a potency in excess of that which the combination would be expected to produce on the basis of the potencies of each herbicide applied individually.

— The term "herbicide" is used herein to denote a compound which controls or modifies the growth of plants.

— The term "herbicidally effective amount" is used to indicate quantity of such a compound or combination of such compounds which is capable of producing a controlling or modifying effect.

— "Controlling" or "modifying effects" include all deviations from natural development, for example, killing, retardation, defoliation, desiccation, regulation, stunting, tillering, stimulating, leaf burn, dwarfing and the like.

— The term "plants" is used to include germinating seeds, emerging seedlings and established vegetation, including roots and above-ground portions.

— In the compositions of this invention, the (pyrrolidone): phosphonic acid) weight ratio at which the herbicidal response is synergistic lies within the range of about 0.1:1 to about 20:1, preferably about 0.1:1 to about 10:1.

Application rates will depend upon the weeds to be controlled and the degree of control desired. In general, the compositions of this invention are most efficiently employed at a rate of 0.01 to 50 pounds per acre (0.011 to 56 kilograms per hectare) of the active ingredient, preferably 0.1 to 25 pounds per acre (0.11 to 28 kilograms per hectare).

Examples of pyrrolidones useful in the present invention are:

1-phenyl-3-chloro-4-chloromethyl-2-pyrrolidone.
1-phenyl-3,3-dichloro-4-chloromethyl-2-pyrrolidone.
1-(2',6'-dimethylphenyl)-3-chloro-4-chloromethyl-2-pyrrolidone.
1-m-chlorophenyl-3-chloro-4-chloromethyl-2-pyrrolidone.
1-p-chlorophenyl-3-chloro-4-chloromethyl-2-pyrrolidone.
1-m-trifluoromethylphenyl-3-chloro-4-chloromethyl-2-pyrrolidone.
1-phenyl-3-chloro-3-methyl-4-chloromethyl-2-pyrrolidone.
1-(3', 4'-dichlorophenyl)-3,3-dichloro-4-chloromethyl-2-pyrrolidone.
1-m-trifluoromethylphenyl-3,3-dichloro-4-chloromethyl-2-pyrrolidone.
1-m-trifluoromethylphenyl-3-chloro-3-methyl-4-chloromethyl-2-pyrrolidone.
1-p-tolyl-3-chloro-4-chloromethyl-2-pyrrolidone.
1-m-fluorophenyl-3-chloro-4-chloromethyl-2-pyrrolidone.
1-m-trifluoromethyl-3-bromo-4-bromomethyl-2-pyrrolidone.
1-(3',4''-dichlorophenyl)-3-chloro-4-chloromethyl-2-pyrrolidone.
1-m-nitrophenyl-3-chloro-4-chloromethyl-2-pyrrolidone.
1-(3',5'-dichlorophenyl)-3-chloro-4-chloromethyl-2-pyrrolidone.
1-m-trifluoromethylphenyl-3-chloro-4-(1'-chloroethyl)-2-pyrrolidone.
1-m-cyanophenyl-3-chloro-4-chloromethyl-2-pyrrolidone.
1-(3',5'-dichlorophenyl)-3,3-dichloro-4-chloromethyl-2-pyrrolidone.
1-m-trifluoromethylphenyl-3,3-dichloro-4-(1'-chloroethyl)-2-pyrrolidone.
1-m-cyanophenyl-3,3-dichloro-4-chloromethyl-2-pyrrolidone.
1-(3'-trifluoromethyl-4'-chlorophenyl)-3-chloro-4-chloromethyl-2-pyrrolidone.
1-(3'-trifluoromethyl-4'-chlorophenyl)-3,3-dichloro-4-chloromethy -2-pyrrolidone.
1-m-trifluoromethylthiophenyl-3-chloro-4-chloromethyl-2-pyrrolidone.
1-m-methylthiophenyl-3-chloro-4-chloromethyl-2-pyrrolidone.
1-m-trifluoromethylsulfinylphenyl-3-chloro-4-chloromethyl-2-pyrrolidone.
1-m-methylsulfinylphenyl-3-chloro-4-chloromethyl-2-pyrrolidone.
1-m-methylsulfonylphenyl-3-chloro-4-chloromethyl-2-pyrrolidone.
1-m-trifluoromethylsulfonylphenyl-3-chloro-4-chloromethyl-2-pyrrolidone.
1-(3',5'-bis-trifluoromethylphenyl)-3-chloro-4-chloromethyl -2-pyrrolidone.
1-m-methoxyphenyl-3-chloro-4-chloromethyl-2-pyrrolidone.
1-m-acetylphenyl-3-chloro -4-chloromethyl-2-pyrrolidone.
1-m-tolyl-3-chloro-4-chloromethyl-2-pyrrolidone.
1-m-trifluoromethylphenyl-4-chloromethyl-2-pyrrolidone.
1-m-bromophenyl-3-chloro-4-chloromethyl-2-pyrrolidone.

1-o-chlorophenyl-3-chloro-4-chloromethyl-2-pyrrolidone.
1-m-iodophenyl-3-chloro-4-chloromethyl-2-pyrrolidone.
1-p-méthoxyphenyl-3-chloro-4-chloromethyl -2-pyrrolidone.
1-o-trifluoromethylphenyl-3-chloro-4-chloromethyl-2-pyrrolidone.
1-m-pentafluoropropionamidophenyl-3-chloro-4-chloromethyl-2-pyrrolidone.
cis-1-mm-trifluoromethylphenyl-3-chloro-4-chloromethyi-2-pyrrolidone.
trans-1-m-trifluoromethylphenyl-3-chloro-4-chloromethyl-2-pyrrolidone.

These and other pyrrolidones within the scope of the invention can be prepared by the procedures described in U.S. Patent No. 4 110 105.

Examples of substituted phosphonic acids useful in the present invention are:

| | | |
|---|---|---|
| methylphosphonic acid | butylphosphonic acid | 2-chloroethylphosphonic acid |
| ethyl phosphonic acid | t-butylphosphonic acid | 2-bromoethylphosphonic acid |
| propylphosphonic acid | s-butylphosphonic acid | N-phosphonomethylglycine. |

These and other substituted phosphonic acids within the scope of the invention can be prepared by the procedures described in U.S. Patent No. 3 799 758 and the Maynard et al. articles mentioned above.

The following examples provide further illustration demonstrating the synergistic herbicidal response of the present compositions.

Example 1

This example demonstrates the synergistic response of 1-m-trifluoromethylphenyl-3-chloro-4-chloromethyl-2-pyrrolidone and 2-chloroethylphosphonic acid in combined postemergence application to a variety of weeds.

Aluminum flats measuring 15.2 x 22.9 x 70.0 centimeters (cm) were filled to a depth of 5.0 cm with loamy sand soil containing 50 parts per million (ppm) each of the commercial fungicide cis-N[(trichloromethyl)thio]-4-cyclohexene-1,2-dicarboximide (Captan®) and 18—18—18 fertilizer (percentages of N—$P_2O_5$—$K_2O$ on a weight basis). Several rows were impressed across the width of each flat and each row was seeded with a single weed species.
The weed species included:

| | |
|---|---|
| yellow nutsedge | *(Cyperus esculentus),* |
| nightshade | *(Solanum nigrum),* |
| johnsongrass | *(Sorghum halopense)* |
| wild oat | *(Avena fatua)* |
| velvetleaf | *(Abutilon theophrasti),* |
| jimsonweed | *(Datura stramonium)* |
| and annual morning glory | *(Ipomoea purpurea).* |

Ample seeds were planted to give about 20 to 50 seedlings per row after emergence depending on the size of the plants. The flats were then placed in a greenhouse for two weeks, where they were watered regularly.

At the end of ths period, the foliage on the emergent weeds was sprayed with aqueous solutions of the test compounds. The quantities sprayed were such that the amount of each test compound applied per flat corresponded to the desired application rate in pounds per acre. In control flats, the test compounds were applied alone at various application rates, whereas in the test flats, solutions containing both compounds were applied. Additional flats not treated at all were used as a standard for measuring the extent of weed control occurring in the treated flats.

Three weeks after treatment, the control and test flats were compared to the standard and each row was rated visually in terms of percent control ranging from 0% to 100%, with 0% representing the same degree of growth as the same row as in the standard and 100% representing complete kill of all weeds in the row. All types of plant injury were taken into consideration.

The results of these tests are listed in Table I herein-after, in the columns headed by the symbol "O" (indicating the "observed" results). These results are compared with the expected results, shown in the columns headed by the symbol "E", derived from the control date using Limpel's formula (Limpel

and al., 1062 "Weed Control by Dimethylcholoroterephtalate Alone and in Certain Combinations", Proc. *NEWCC*, Vol. 16, pp. 48—53):

$$E = X + Y - \frac{XY}{100}$$

where:

X = observed injury when one of the herbicides is used alone, and
Y = observed percent injury when the other herbicide is used alone.

An asterisk (*) is used to indicate the tests where the results show synergism, i.e., where the observed result exceeds the expected result. Since synergism can only be detected when the expected result is less than 100, tests where both the E and O values are 100 are left blank.

It is clear from the table that synergisms was widely evident over the entire range of application rates tested.

## TABLE I

### – HERBICIDE SYNERGISM TEST RESULTS –

Pyrrolidone:

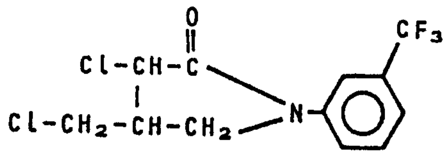

applied postemergence

Phosphonic Acid:

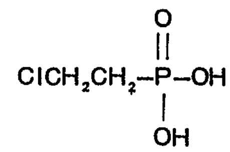

applied postemergence

Percent Control – O: Observed  E: Expected

| Application Rates (lb/A) | | Nightshade | | Jimsonweed | | Velvetleaf | | Nutsedge | | Morningglory | | Johnsongrass | | Wild Oat | |
|---|---|---|---|---|---|---|---|---|---|---|---|---|---|---|---|
| Pyrrolidone | Phosphonic Acid | O | E | O | E | O | E | O | E | O | E | O | E | O | E |
| Control Date: | | | | | | | | | | | | | | | |
| 0.25 | – | 20 | | 30 | | 20 | | 0 | | 0 | | 5 | | 0 | |
| 0.5 | – | 40 | | 65 | | 60 | | 10 | | 10 | | 15 | | 20 | |
| 1.0 | – | 95 | | 100 | | 98 | | 40 | | 30 | | 60 | | 40 | |
| – | 0.25 | 0 | | 0 | | 0 | | 0 | | 0 | | 0 | | 0 | |
| – | 0.5 | 0 | | 0 | | 0 | | 0 | | 0 | | 0 | | 0 | |
| – | 1.0 | 10 | | 30 | | 0 | | 0 | | 0 | | 10 | | 0 | |
| Test Data: | | | | | | | | | | | | | | | |
| 0.25 | 0.25 | 40* | 20 | 100* | 30 | 20* | 20 | 0 | 0 | 0 | 0 | 0 | 5 | 0 | 0 |
| 0.25 | 0.5 | 60* | 20 | 100* | 30 | 40* | 20 | 0 | 0 | 10* | 0 | 0 | 5 | 0 | 0 |
| 0.25 | 1.0 | 70* | 28 | 100* | 51 | 100* | 20 | 0 | 0 | 20* | 0 | 20* | 15 | 30* | 0 |
| 0.5 | 0.25 | 80* | 40 | 100* | 65 | 85* | 60 | 0 | 10 | 20* | 10 | 30* | 15 | 20 | 20 |
| 0.5 | 0.5 | 100* | 40 | 100* | 65 | 100* | 60 | 10 | 10 | 20* | 10 | 65* | 15 | 25* | 20 |
| 0.5 | 1.0 | 100* | 46 | 100* | 76 | 100* | 60 | 10 | 10 | 30* | 10 | 60* | 24 | 30* | 20 |
| 1.0 | 0.25 | 100* | 95 | | | | | 40 | 40 | 20 | 30 | 90* | 60 | 50* | 40 |
| 1.0 | 0.5 | 100* | 95 | | | | | 60* | 40 | 25 | 30 | 98* | 60 | 100* | 40 |
| 1.0 | 1.0 | 100* | 96 | | | | | 65* | 40 | 30 | 30 | 98* | 64 | 100* | 40 |

* Synergistic effect shown. Blank spaces indicate 100% control in both observed and expected results, precluding evaluation of synergism.

Example 2

In this example, the same herbicides used in Example 1 were used. Here, however, the pyrrolidone was applied in pre-emergence fashion: it was sprayed over the soil surface on the same day on which the weed seeds were planted, i.e., before the weeds were able to emerge from the soil. The phosphonic acid was applied in postemergence fashion as in Example 1. The application rates were varied somewhat to show a wider range and the injury ratings were taken four weeks after planting rather than five. Otherwise, the procedures were identical to those of Example 1.

The results are shown in Table II herein-after, where a strong degree of synergism is evident at higher application rates.

Example 3

This example demonstrates the synergistic response of 1-m-trifluoromethylphenyl-3-chloro-4-chloromethyl-2-pyrrolidone and N-phosphonomethylglycine in combined post-emergence application.

The weed species used in this test included:

shattercane *(Sorghum bicolor)*

and annual ryegrass *(Lolium multiflorum)*

as well as the

yellow nutsedge,

wild oat,

johnsongrass,

and morning glory species listed above,

Fiber flats were used rather than aluminum. The emergent weeds were treated three weeks after seeding and injury ratings were taken four weeks later. Otherwide, the procedure was the same as that described in Example 1.

The results are shown in Table III herein-after, where a strong degree of synergism is evident in many of the tests.

TABLE II

– HERBICIDE SYNERGISM TEST RESULTS –

Pyrrolidone: 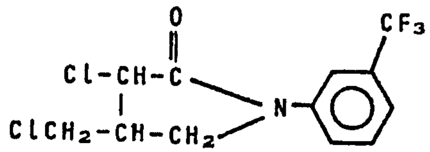

applied pre-emergence

Phosphonic Acid: 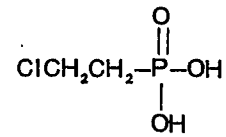

applied postemergence

Percent Control – O: Observed E: Expected

| Application Rates (lb/A) | | Nightshade | | Jimsonweed | | Velvetleaf | | Nutsedge | | Morningglory | | Johnsongrass | | Wild Oat | |
|---|---|---|---|---|---|---|---|---|---|---|---|---|---|---|---|
| Pyrrolidone | Phosphonic Acid | O | E | O | E | O | E | O | E | O | E | O | E | O | E |
| Control Date: | | | | | | | | | | | | | | | |
| 0.0625 | – | 0 | | 0 | | 10 | | 0 | | 0 | | 10 | | 0 | |
| 0.125 | – | 30 | | 20 | | 30 | | 0 | | 10 | | 20 | | 10 | |
| 0.25 | – | 50 | | 60 | | 65 | | 10 | | 40 | | 30 | | 20 | |
| – | 0.5 | 0 | | 0 | | 0 | | 0 | | 0 | | 0 | | 0 | |
| – | 1.0 | 0 | | 0 | | 0 | | 0 | | 0 | | 0 | | 0 | |
| – | 2.0 | 0 | | 0 | | 0 | | 0 | | 0 | | 0 | | 0 | |
| Test Data: | | | | | | | | | | | | | | | |
| 0.0625 | 0.5 | 0 | 0 | 0 | 0 | 10 | 10 | 0 | 0 | 0 | 0 | 0 | 10 | 0 | 0 |
| 0.0625 | 1.0 | 0 | 0 | 0 | 0 | 10 | 10 | 0 | 0 | 0 | 0 | 0 | 10 | 0 | 0 |
| 0.0625 | 2.0 | 0 | 0 | 0 | 0 | 10 | 10 | 0 | 0 | 0 | 0 | 0 | 10 | 0 | 0 |
| 0.125 | 0.5 | 30 | 30 | 20 | 20 | 10 | 30 | 0 | 0 | 10 | 10 | 10 | 20 | 10 | 10 |
| 0.125 | 1.0 | 30 | 30 | 20 | 20 | 30 | 30 | 0 | 0 | 10 | 10 | 10 | 20 | 10 | 10 |
| 0.125 | 2.0 | 30 | 30 | 20 | 20 | 30 | 30 | 0 | 0 | 10 | 10 | 10 | 20 | 10 | 10 |
| 0.25 | 0.5 | 100* | 50 | 60 | 60 | 100* | 65 | 10 | 10 | 40 | 40 | 100* | 30 | 30* | 20 |
| 0.25 | 1.0 | 100* | 50 | 65* | 60 | 100* | 65 | 10 | 10 | 40 | 40 | 100* | 30 | 60* | 20 |
| 0.25 | 2.0 | 100* | 50 | 70* | 60 | 100* | 65 | 10 | 10 | 40 | 40 | 100* | 30 | 65* | 20 |

* Synergistic effect shown.

TABLE III

– HERBICIDE SYNERGISM TEST RESULTS –

Pyrrolidone: 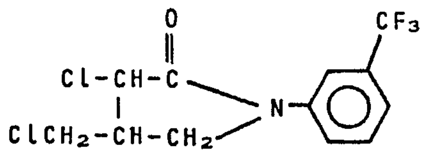

applied postemergence

Phosphonic Acid: 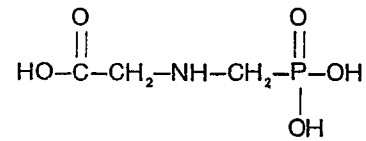

applied postemergence

Percent Control – O: Observed E: Expected

| Application Rates (lb/A) | | Shattercane | | Nutsedge | | Ryegrass | | Morningglory | | Wild Oat | | Johnsongrass | |
|---|---|---|---|---|---|---|---|---|---|---|---|---|---|
| Pyrrolidone | Phosphonic Acid | O | E | O | E | O | E | O | E | O | E | O | E |
| Control Data: | | | | | | | | | | | | | |
| 0.125 | – | 10 | | 0 | | 0 | | 0 | | 10 | | 30 | |
| 0.25 | – | 20 | | 0 | | 30 | | 0 | | 60 | | 40 | |
| 0.5 | – | 30 | | 10 | | 65 | | 0 | | 70 | | 60 | |
| – | 0,125 | 0 | | 70 | | 40 | | 0 | | 0 | | 0 | |
| – | 0,25 | 0 | | 70 | | 60 | | 0 | | 30 | | 0 | |
| – | 0,5 | 65 | | 80 | | 90 | | 30 | | 60 | | 0 | |
| Test Data: | | | | | | | | | | | | | |
| 0.125 | 0,125 | 10 | 10 | 30 | 70 | 40 | 40 | 0 | 0 | 10* | 10 | 100* | 30 |
| 0.125 | 0,25 | 0 | 10 | 75* | 70 | 70* | 60 | 20* | 0 | 100* | 37 | 100* | 30 |
| 0.125 | 0,5 | 50 | 69 | 75 | 80 | 95* | 90 | 60* | 30 | 100* | 64 | 100* | 30 |
| 0.25 | 0,125 | 20 | 20 | 50 | 70 | 70* | 58 | 60* | 0 | 100* | 60 | 100* | 40 |
| 0.25 | 0,25 | 20 | 20 | 60 | 70 | 95* | 72 | 60* | 0 | 100* | 72 | 60* | 40 |
| 0.25 | 0,5 | 60 | 72 | 70 | 80 | 98* | 93 | 100* | 30 | 100* | 84 | 70* | 40 |
| 0.5 | 0,125 | 40* | 30 | 80* | 76 | 70 | 79 | 40* | 0 | 100* | 70 | 100* | 60 |
| 0.5 | 0,25 | 30 | 30 | 60 | 76 | 70 | 86 | 50* | 0 | 100* | 79 | 60 | 60 |
| 0.5 | 0,5 | 40 | 76 | 98* | 84 | 99* | 97 | 75* | 30 | 100* | 88 | 100* | 60 |

* Synergistic effect shown.

Example 4

The same herbicides tested in Example III were tested in the data shown in this example, the main difference being that the pyrrolidone was applied pre-emergence, rather than postemergence with the phosphonic acid. The latter was applied two weeks after planting, and injury ratings were taken two weeks later. The procedure was otherwise identical to that of Example 1.

The results are shown in Table IV, herein after, where synergism is indicated at all application rates.

Example 5

The tests shown in this example were run with 1-m-cyanophenyl-3-chloro-4-chloromethyl-2-pyrrolidone and N-phosphonomethylglycine in combined postemergence application. The weed species included:

watergrass

foxtail

in addition to the wild oat,

yellow nutsedge,

annual morning glory,

and annual ryegrass

previously tested, in fiber flats. The weeds were treated ten days after seeding, and injury ratings were taken 17 days later. Since the tests were performed during the winter season, low growth rates occurred rendering comparisons with the standard more difficult. Synergism, however, is shown in many of the tests results, which are listed in Table V herein-after.

TABLE IV

– HERBICIDE SYNERGISM TEST RESULTS –

Pyrrolidone: 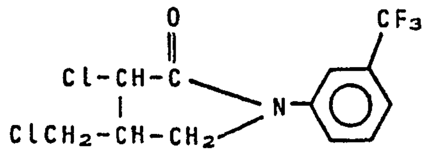

applied pre-emergence

Phosphonic Acid: 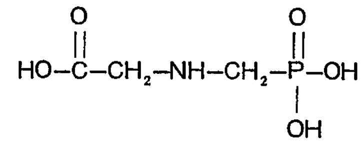

applied postemergence

Percent Control – O: Observed E: Expected

| Application Rates (lb/A) Pyrrolidone | Phosphonic Acid | Nightshade O | Nightshade E | Jimsonweed O | Jimsonweed E | Velvetleaf O | Velvetleaf E | Nutsedge O | Nutsedge E | Morningglory O | Morningglory E | Johnsongrass O | Johnsongrass E | Wild Oat O | Wild Oat E |
|---|---|---|---|---|---|---|---|---|---|---|---|---|---|---|---|
| Control Data: | | | | | | | | | | | | | | | |
| 0.0625 | – | 0 | | 0 | | 10 | | 0 | | 0 | | 10 | | 0 | |
| 0.125 | – | 30 | | 20 | | 30 | | 0 | | 10 | | 20 | | 10 | |
| 0.25 | – | 50 | | 60 | | 65 | | 10 | | 40 | | 30 | | 20 | |
| – | 0.125 | 30 | | 20 | | 0 | | 10 | | 10 | | 0 | | 0 | |
| – | 0.25 | 60 | | 30 | | 20 | | 20 | | 15 | | 10 | | 0 | |
| – | 0.5 | 100 | | 50 | | 100 | | 40 | | 30 | | 60 | | 100 | |
| Test Data: | | | | | | | | | | | | | | | |
| 0.0625 | 0.125 | 75* | 30 | 20 | 20 | 0 | 10 | 10 | 10 | 10 | 10 | 10 | 10 | 10 | 0 |
| 0.0625 | 0.25 | 100* | 60 | 30 | 30 | 40* | 28 | 30* | 20 | 10 | 15 | 15 | 19 | 40 | 0 |
| 0.0625 | 0.5 | | | 60* | 50 | | | 50* | 40 | 40* | 30 | 60 | 64 | 65 | 100 |
| 0.125 | 0.125 | 100* | 51 | 20 | 36 | 20 | 30 | 10 | 10 | 10 | 19 | 40* | 20 | 20* | 10 |
| 0.125 | 0.25 | 100* | 72 | 30 | 44 | 60* | 44 | 40* | 20 | 20 | 24 | 60* | 28 | 40* | 10 |
| 0.125 | 0.5 | | | 100* | 60 | | | 90* | 40 | 30 | 37 | 85* | 68 | | |
| 0.25 | 0.125 | 100* | 65 | 40 | 68 | 100* | 65 | 30* | 19 | 40 | 46 | 100* | 30 | 100* | 20 |
| 0.25 | 0.25 | 100* | 85 | 50 | 72 | 100* | 72 | 60* | 28 | 50* | 49 | 100* | 37 | 95* | 20 |
| 0.25 | 0.5 | | | 60 | 80 | | | 75* | 46 | 60* | 58 | 100* | 72 | | |

* Synergistic effect shown.

Blank spaces indicate 100% control in both observed and expected results, precluding synergism evaluation.

TABLE V

– HERBICIDE SYNERGISM TEST RESULTS –

Pyrrolidone:

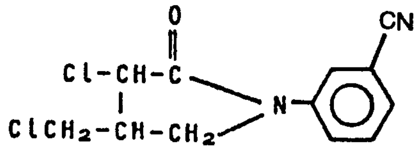

applied postemergence

Phosphonic Acid:

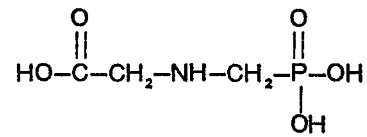

applied postemergence

Percent Control – O: Observed E: Expected

| Application Rates (lb/A) | | Wild Oat | | Watergrass | | Nutsedge | | Morningglory | | Ryegrass | | Foxtail | |
|---|---|---|---|---|---|---|---|---|---|---|---|---|---|
| Pyrrolidone | Phosphonic Acid | O | E | O | E | O | E | O | E | O | E | O | E |
| Control Data: | | | | | | | | | | | | | |
| 0.062 | – | 0 | | 0 | | 0 | | 0 | | 0 | | 0 | |
| 0.125 | – | 0 | | 0 | | 0 | | 0 | | 0 | | 0 | |
| 0.25 | – | 0 | | 0 | | 0 | | 0 | | 0 | | 30 | |
| – | 0.125 | 0 | | 0 | | 0 | | 0 | | 0 | | 50 | |
| – | 0.25 | 0 | | 0 | | 0 | | 0 | | 0 | | 65 | |
| – | 0.5 | 0 | | 0 | | 20 | | 10 | | 0 | | 75 | |
| Test Data: | | | | | | | | | | | | | |
| 0.062 | 0.125 | 0 | 0 | 0 | 0 | 0 | 0 | 10* | 0 | 0 | 0 | 40 | 50 |
| 0.062 | 0.25 | 0 | 0 | 0 | 0 | 40* | 0 | 20* | 0 | 20* | 0 | 65* | 60 |
| 0.062 | 0.5 | 0 | 0 | 20* | 0 | 60* | 20 | 30* | 10 | 40* | 0 | 75 | 75 |
| 0.125 | 0.125 | 0 | 0 | 0 | 0 | 0 | 0 | 0 | 0 | 0 | 0 | 50 | 50 |
| 0.125 | 0.25 | 0 | 0 | 0 | 0 | 0 | 0 | 0 | 0 | 0 | 0 | 50 | 60 |
| 0.125 | 0.5 | 0 | 0 | 0 | 0 | 20 | 20 | 10 | 10 | 10* | 0 | 60 | 75 |
| 0.25 | 0.125 | 0 | 0 | 0 | 0 | 0 | 0 | 0 | 0 | 0 | 0 | 30 | 65 |
| 0.25 | 0.25 | 0 | 0 | 0 | 0 | 10* | 0 | 20* | 0 | 10* | 0 | 60 | 76 |
| 0.25 | 0.5 | 0 | 0 | 40* | 0 | 60* | 20 | 30* | 10 | 30* | 0 | 100* | 83 |

* Synergistic effect shown.

The compositions of this invention are useful as herbicides demonstrating synergistic activity for the control of undesirable vegetation. The compositions can be formulated in the same manner in which herbicides are generally formulated. The compound may be applied either separately or combined as part of a two-part herbicidal system.

The object of the formulation is to apply the compositions to the locus where control is desired by a convenient method. The "locus" may include soil, seeds, seedlings, and vegetation.

Formulations will generally contain several additives. Among these are some inert ingredients and diluent carriers such as organic solvents, water, oil and water, water in oil emulsions, carriers of dust and granules, and surface active, wetting, dispersing, and emulsifying agents.

Fertilizers, e.g., ammonium nitrate, urea and superphosphate may also be added.

Aids to rooting and growth, e.g., compost, manure, humus, sand, etc., may likewise be added.

The formulations are commonly dusts, wettable powders, granules, solutions of emulsifiable concentrates.

Dusts are free-flowing compositions containing the herbicidal compound impregnated on a particulate carrier. The particle size of the carrier is usually in the approximate range of 30 to 50 microns. Examples of suitable carriers are talc, bentonite, diatomaceous earth, and pyrophyllite. Anticaking antistatic agents can be added, if desired. The composition generally contains up to 50% of active ingredient. Dusts, like liquid compositions, can be applied from boom and hand or power sprayers or airplanes.

Wettable powders are finely divided compositions comprising a particulate carrier impregnated with the herbicide compound and additionally containing one or more surface active agents. The surface active agent promotes rapid dispersion of the powder in aqueous medium to form stable, sprayable suspensions. A wide variety of surface active agents can be used, for example, long chain fatty alcohols; salts of sulfonic acid; esters of long chain fatty acids; and polyhydric alcohols; in which the alcohol groups are free, omega-substituted polyethylene glycols of relatively long chain length. A list of surface active agents suitable for use in agriculture formulations can be found in Wade Van Valkenburg, "Pesticide Formulations" (Marcel Dekker, Inc., New York, 1973) at pages 79—84.

Granules comprise the herbicidal composition impregnated on a particulate inert carrier having a particle size of about 1 to 2 millimeters in diameter. The granules can be made by spraying a solution of the active ingredient in a volatile solvent onto the granular carrier. Suitable carriers in preparation of granules include clay, vermiculite, sawdust, granular carbon, etc.

The herbicidal compositions can also be applied to the soil in the form of a solution in a suitable solvent. Solvents frequently used in herbicidal formulations include kerosene, fuel oil, xylene, petroleum fractions with boiling ranges above xylene, and aromatic petroleum fractions rich in methylated naphthalenes.

Emulsifiable concentrates consist of an oil solution of the herbicide along with an emulsifying agent. Prior to use the concentrate is diluted with water to form a suspended emulsion of oil droplets. The emulsifiers used are usually mixture of anionic and nonionic surfactants. Other additives such as spreading agents and stickers can be included in the emulsifiable concentrate.

It is not necessary that the compositions be admixed with the soil particles. After application by the above discussed methods, they may be distributed below the surface to a depth of at least one-half inch by conventional means such as discing, dragging, or mixing.

The compositions of this invention can also be applied by addition to irrigation water supplied to the field to be treated. This method of application permits the penetration of the compositions into the soil as the water is absorbed therein.

**Claims**

1. A synergistic herbicidal composition comprising a mixture of:

(a) a pyrrolidone of the formula:

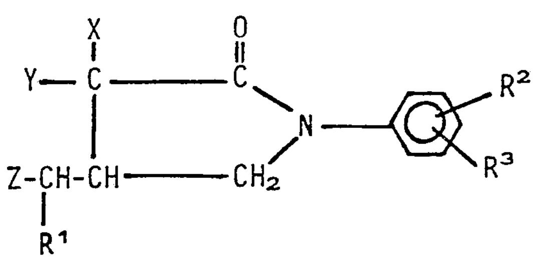

in which:
X is selected from the group consisting of hydrogen, chlorine and methyl;
Y is selected from the group consisting of hydrogen, chlorine and bromine;
Z is selected from the group consisting of chlorine and bromine;

$R^1$ is selected from the group consisting of hydrogen and $C_1$—$C_4$ alkyl;

$R_2$ is selected from the group consisting of hydrogen, halogen, $C_1$—$C_4$ alkyl, acetyl, trifluoromethyl, nitro, cyano, $C_1$—$C_4$ alkoxy, $C_1$—$C_4$ alkylthio, $C_1$—$C_4$ alkylsulfinyl, $C_1$—$C_4$ alkylsulfonyl, trifluoromethylthio, trifluoromethylsulfinyl, trifluoromethylsulfonyl, pentafluoropropionamido, and 3-methylureido; and

$R^3$ is selected from the group consisting of hydrogen, $C_1$—$C_4$ alkyl, chlorine and trifluoromethyl; *and*

(b) a phosphonic acid of the formula:

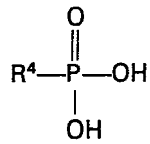

in which:

$R^4$ is selected from the group consisting of $C_1$—$C_4$ alkyl, $C_1$—$C_4$ haloalkyl, and —$CH_2NHCH_2COOH$, at a weight ratio of (a) to (b) in the range of 0.1:1 to 20:1.

2. A synergistic herbicidal composition as in claim 1 wherein:

(a) is a pyrrolidone of the formula:

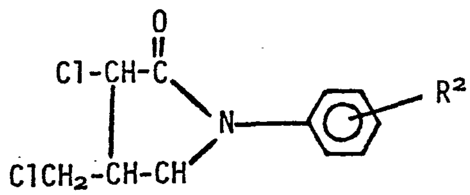

in which: $R^2$ is trifluoromethyl.

3. A synergistic herbicidal composition as in claim 1 wherein:

(a) is a pyrrolidone of the formula:

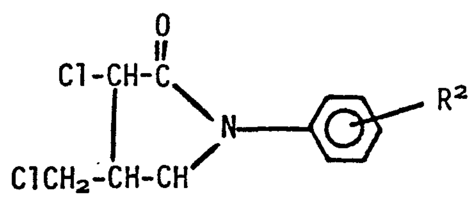

in which, R is cyano.

4. A composition according to claim 2 or 3 in which the weight ratio of (a) to (b) is in the range of 0.1:1 to 10:1.

5. A composition according to claim 2 in which:
$R^2$ is m-trifluoromethyl, and
$R^4$ is 2-chloroethyl.

6. A composition according to claim 2 in which:
$R^2$ is m-trifluoromethyl, and
$R^4$ is —$CH_2NHCH_2COOH$

7. A composition according to claim 3 in which:
$R^2$ is m-cyano, and
$R^4$ is 2-chloroethyl.

8. A composition according to claim 3 in which:
$R^2$ is m-cyano, and
$R^4$ is $CH_2NHCH_2COOH$.

9. A method of controlling undesirable vegetation which comprises applying to the locus where control is desired a herbicidally effective amount of a composition as in claim 1.

10. A method of controlling undesirable vegetation which comprises applying to the locus where control is desired a herbicidally effective amount of a composition as in claim 2.

11. A method of controlling undesirable vegetation which comprises applying to the locus where control is desired a herbicidally effective amount of a composition as in claim 3.

12. A method according to Claim 10 or 11 in which the weight ratio of (a) and (b) is in a range of 0.1:1 to 10:1.

13. A method according to Claim 10 in which:
$R^2$ is m-trifluoromethyl, and
$R^4$ is 2-chloroethyl.

14. A method according to Claim 10 in which:
$R^2$ is m-trifluoromethyl, and
$R^4$ is $—CH_2NHCH_2COOH$.

15. A method according to Claim 11 in which:
$R^2$ is m-cyano, and
$R^4$ is 2-chloroethyl.

16. A method according to Claim 11 in which:
$R^2$ is m-cyano, and
$R^4$ is $—CH_2NHCH_2COOH$.

**Revendications**

1. Composition herbicide synergique, caractérisée en ce qu'elle renferme un mélange de:
(a) une pyrrolidone de formule:

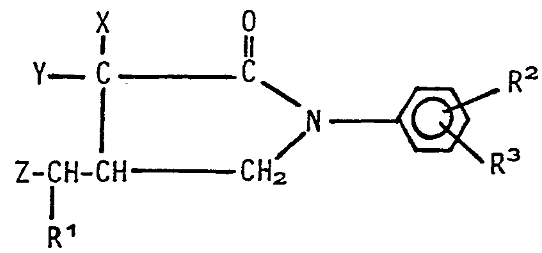

dans laquelle:
X représente un atome d'hydrogène, de chlore ou un groupe méthyle;
Y représente un atome d'hydrogène, de chlore ou de brome;
Z représente un atome de chlore ou de brome;
$R^1$ est un atome d'hydrogène ou un groupe alkyle en $C_1—C_4$;
$R^2$ est un atome d'hydrogène, d'halogène, un groupe alkyle en $C_1—C_4$, acétyle, trifluorométhyle, nitro, cyano, alkoxy en $C_1—C_4$, alkylthio en $C_1—C_4$, alkylsulfinyle en $C_1—C_4$, alkylsulfonyle en $C_1—C_4$, trifluorométhylthio, trifluorométhylsulfinyle, trifluorométhylsulfonyle, pentafluoropropionamide, ou 3-méthyluréido; et
$R^3$ est un atome d'hydrogène, un groupe alkyle en $C_1—C_4$, un atome de chlore ou un groupe trifluorométhyle;
et

(b) un acide phosphonique de formule:

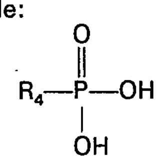

dans laquelle:
$R^4$ est un groupe alkyle en $C_1—C_4$, haloalkyle en $C_1—C_4$ ou $—CH_2NHCH_2COOH$, le rapport pondéral (a)/(b) étant compris entre 0,1/1 et 20/1 environ.

2. Composition herbicide synergique selon la revendication 1, caractérisée en ce que:
(a) est une pyrrolidone de formule:

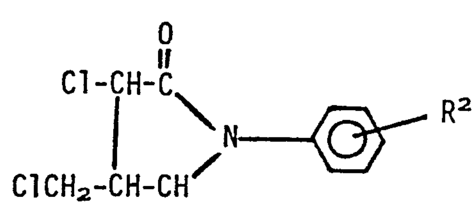

dans laquelle:
$R^2$ est une groupe trifluorométhyle.

3. Composition herbicide synergique selon la revendication 1, caractérisée en ce que:
(a) est une pyrrolidone de formule:

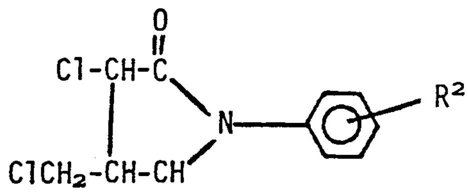

dans laquelle:
$R^2$ est un groupe cyano,

4. Composition selon la revendication 2 ou 3, caractérisée en ce que le rapport pondéral (a)/(b) est compris entre 0,1/1 et 10/1 environ.

5. Composition selon la revendication 2, caractérisée en ce que:
$R^2$ est un groupe m-trifluorométhyle, et
$R^4$ est un groupe 2-chloroéthyle.

6. Composition selon la revendication 2, caractérisée en ce que:
$R^2$ est un groupe m-trifluorométhyle, et
$R^4$ est un groupe $-CH_2NHCH_2COOH$.

7. Composition selon la revendication 3, caractérisée en ce que:
$R^2$ est un groupe m-cyano, et
$R^4$ est un groupe 2-chloroéthyle.

8. Composition selon la revendication 3, caractérisée en ce que:
$R^2$ est un groupe m-cyano, et
$R^4$ est un groupe $-CH_2NHCH_2COOH$.

9. Méthode de lutte contre les végétations indésirables, consistant à appliquer à l'endroit où l'on désire effectuer le contrôle, une quantité suffisante d'une composition herbicide selon la revendication 1.

10. Méthode de lutte contre la végétation indésirable, consistant à appliquer à l'endoirt où l'on désire effectuer le contrôle, une quantité suffisante d'une composition herbicide selon la revendication 2.

11. Méthode de lutte contre la végétation indésirable, consistant à appliquer à l'endroit où l'on désire effectuer le contrôle, une quantité suffisante d'une composition herbicide selon la revendication 3.

12. Méthode selon la revendication 10 ou 11, caractérisée en ce que le rapport pondéral (a)/(b) est compris entre 0,1/1 et 10/1 environ.

13. Méthode selon la revendication 10, caractérisée en ce que:
$R^2$ est un groupe m-trifluorométhyle, et
$R^4$ est un groupe 2-chloroéthyle.

14. Méthode selon la revendication 10, caractérisée en ce que:
$R^2$ est un groupe m-trifluorométhyle, et
$R^4$ est un groupe $-CH_2NHCH_2COOH$.

15. Méthode selon la revendication 11, caractérisée en ce que:
$R^2$ est un groupe m-cyano, et
$R^4$ est un groupe 2-chloroéthyle.

16. Méthode selon la revendication 11, caractérisée en ce que:
$R^2$ est un groupe m-cyano, et
$R^4$ est un groupe $-CH_2NHCH_2COOH$.

**Patentansprüche**

1. Synergetisches Unkrautvertilgungsmittel, dadurch gekennzeichnet, dass es eine Mischung folgender Stoffe enthält:
(a) Pyrrolidon gemäss der Formel:

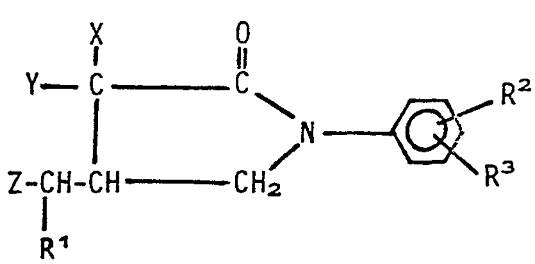

wobei:

X ein Wasserstoffatom, ein Chloratom oder eine Methylgruppe darstellt,
Y ein Wasserstoffatom, ein Chloratom oder ein Bromatom darstellt,
Z ein Chloratom oder ein Bromatom darstellt,
$R^1$ ein Wasserstoffatom oder eine 1 bis 4 Kohlenstoffatome enthaltende Alkylgruppe darstellt,
$R^2$ eine Wasserstoffatom, eine Halogenatom, eine 1 bis 4 Kohlenstoffatome enthaltende Alkylgruppe, eine Acetylgruppe, eine Trifluorométhylgruppe, eine Nitrogruppe, eine Cyanogruppe, eine 1 bis 4 Kohlenstoffatome enthaltende Alkoxygruppe, eine 1 bis 4 Kohlenstoffatome enthaltende Alkylthiogruppe, eine 1 bis 4 Kohlenstoffatome enthaltende Alkylsulfinylgruppe, eine 1 bis 4 Kohlenstoffatome enthaltende Alkylsulfonylgruppe, eine Trifluoromethylthiogruppe, eine Trifluoromethylsulfinylgruppe, eine Trifluoromethylsulfonylgruppe, eine Pentafluoropropionamidgruppe oder eine 3-Methylureidgruppe darstellt, und $R^3$ ein Wasserstoffatom, eine 1 bis 4 Kohlenstoffatome enthaltende Alkylgruppe, ein Chloratom oder eine Trifluoromethylgruppe darstellt, und

(b) Phosphonsäure gemäss der Formel:

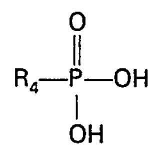

wobei:
$R^4$ eine 1 bis 4 Kohlenstoffatome enthaltende Alkylgruppe, eine 1 bis 4 Kohlenstoffatome enthaltende Halogenalkylgruppe oder die Gruppe $—CH_2NHCH_2COOH$ darstellt,
während das Gewischtsverhältnis der Stoffe (a)/(b) etwa 0,1/1 bis 20/1 beträgt.

2. Synergetisches Unkrautvertilgungsmittel nach anspruch 1, dadurch gekennzeichnet, dass:
(a) Pyrrolidon gemäss der Forme;

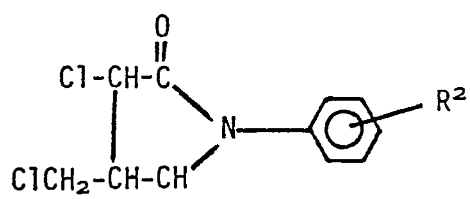

wobei:
$R^2$ eine Trifluoromethylgruppe ist, darstellt.

3. Synergetisches Unkrautvertilgungsmittel nach Anspruch 1, dadurch gekennzeichnet, dass:
(a) Pyrrolidon gemäss der Formel:

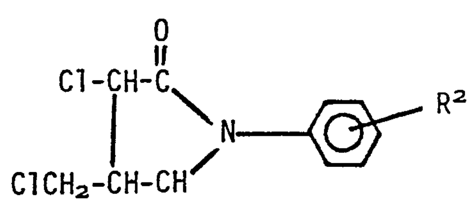

wobei:
$R^2$ eine Cyanogruppe ist, darstellt.

4. Unkrautvertilgungsmittel nach Anspruch 2 oder 3, dadurch gekennzeichnet, dass das Gewichtsverhältnis (a)/(b) etwa 0,1/1 bis 10/1 beträgt.

5. Unkrautvertilgungsmittel nach Anspruch 2, dadurch gekennzeichnet, dass:
$R^2$ eine m-Trifluoromethylgruppe darstellt und
$R^4$ eine 2-Chloroäthylgruppe darstellt.

6. Unkrautvertilgungsmittel nach Anspruch 2, dadurch gekennzeichnet, dass:
$R^2$ eine m-Trifluoromethylgruppe darstellt und
$R^4$ eine Gruppe $—CH_2NHCH_2COOH$ darstellt.

7. Unkrautvertilgungsmittel nach Anspruch 3, dadurch gekennzeichnet, dass:
$R^2$ eine m-Cyanogruppe darstellt und
$R^4$ eine 2-Chloroäthylgruppe darstellt.

8. Unkrautvertilgungsmittel nach Anspruch 3, dadurch gekennzeichnet, dass:
$R^2$ eine m-Cyanogruppe darstellt und
$R^4$ eine Gruppe $—CH_2NHCH_2COOH$ darstellt.

9. Verfahren zur Bekämpfung unerwünschter Vegetation, wobei man an der zu behandelnden

Stelle eine hinreichende Menge eines Unkrautvertilgungsmittels nach anspruch 1 aufbringt.

10. Verfahren zur Bekämpfung unerwünschter Vegetation, wobei man an der zu behandelnden Stelle eine hinreichende Menge eines Unkrautvertilgungsmittels nach Anspruch 2 aufbringt.

11. Verfahren zur Bekämpfung unerwünschter Vegetation, wobei dass man an der zu behandelnden Stelle eine hinreichende Menge eines Unkrautvertilgungsmittels nach Anspruch 3 aufbringt.

12. Verfahren nach Anspruch 10 oder 11, dadurch gekennzeichnet, dass das Gewichstverhältnis (a)/(b) etwa 0,1/1 bis 10/1 beträgt.

13. Verfahren nach Anspruch 10, dadurch gekennzeichnet, dass:
$R^2$ eine m-Trifluoromethylgruppe darstellt und
$R^4$ eine 2-Chloroáthylgruppe darstellt.

14. Verfahren nach Anspruch 10, dadurch gekennzeichnet, dass:
$R^2$ eine-Trifluoromethylgruppe darstellt und
$R^4$ eine Gruppe $—CH_2NHCH_2COOH$ darstellt.

15. Verfahren nach Anspruch 11, dadurch gekennzeichnet, dass:
$R^2$ eine m-Cyanogruppe darstellt und
$R^4$ eine 2-Chloroäthylgruppe darstellt.

16. Verfahren nach Anspruch 11, dadurch gekennzeichnet, dass:
$R^2$ eine m-Cyanogruppe darstellt und
$R^4$ eine Gruppe $—CH_2NHCH_2COOH$ darstellt.